# EUROPÄISCHE PATENTSCHRIFT

(11) **EP 2 189 370 B1**
(45) Veröffentlichungstag und Bekanntmachung des Hinweises auf die Patenterteilung: **16.10.2013**
(21) Anmeldenummer: 09013835.5
(22) Anmeldetag: 04.11.2009
(51) Int. Cl.: B64C 1/14

(54) **Vorrichtung zum Verdunkeln eines Kabinenfensters**
Device for darkening a cabin window
Dispositif d'obscurcissement d'une fenêtre de cabine

(30) Priorität: 22.11.2008 DE 102008058586; 30.01.2009 DE 102009006751; 18.03.2009 DE 202009003840 U
(43) Veröffentlichungstag der Anmeldung: 26.05.2010
(73) Patentinhaber: Diehl Aircabin GmbH, 88471 Laupheim (DE)
(72) Erfinder: Tischer, Reinhard, 89257 Illertissen (DE); Van Den Dolder, Erik Martinus Johannes, 79247 Eschbach (DE)
(74) Vertreter: Diehl Patentabteilung

(56) Entgegenhaltungen:
- EP-A- 1 939 389
- WO-A-2008/049138
- US-B1- 6 832 641

## Beschreibung

Die Erfindung betrifft eine Vorrichtung zum Verdunkeln eines Kabinenfensters, insbesondere eines Kabinenfensters eines Flugzeugs.

Nach dem Stand der Technik sind allgemein Verdunkelungseinrichtungen für Kabinenfenster von Verkehrsflugzeugen bekannt. Dabei handelt es sich meist um Kunststoffschieber, welche zwischen einer Innenverkleidung und dem Kabinenfenster reibschlüssig in Führungsschienen geführt sind.

Mit den herkömmlichen Verdunkelungsvorrichtungen lässt sich das durch das Kabinenfenster einfallende intensive Licht nur grob abschatten. Abgesehen davon erfordert die bekannte Verdunkelungsvorrichtung einen relativ hohen Montageaufwand.

Vorrichtungen zum automatischen Verdunkeln oder Abschatten von Kabinenfenstern von Flugzeugen sind beispielsweise aus den Dokumenten WO 2008/049138 A1, US 6,832,641 B1 und EP 1 939 389 A1 bekannt.

Aufgabe der Erfindung ist es, die Nachteile nach dem Stand der Technik zu beseitigen. Es soll insbesondere eine möglichst einfach zu montierende Vorrichtung zum Verdunkeln eines Kabinenfensters angegeben werden, mit der einfallendes Licht möglichst variabel abgeschattet werden kann. Nach einem weiteren Ziel der Erfindung soll die Vorrichtung mit einer möglichst einfach und kostengünstig ausgestalteten Rückzugsvorrichtung zum Zurückziehen eines Abschaltungsmittels versehen sein.

Diese Aufgabe wird durch die Merkmale des Anspruchs 1 gelöst. Zweckmäßige Ausgestaltungen der Erfindung ergeben sich aus den Merkmalen der Ansprüche 2 bis 14.

Nach Maßgabe der Erfindung ist eine Vorrichtung zum Verdunkeln eines Kabinenfensters mit einer Antriebswelle zum Hin- und Herbewegen eines ersten in zwei Führungsschienen geführten ersten Abschattungsmittels vorgesehen, wobei die Antriebswelle und die Führungsschienen in einer gemeinsamen Montageeinheit zusammengefasst sind. - Das vereinfacht die Montage der Vorrichtung. Das erfindungsgemäß vorgesehene erste Abschattungsmittel ist vorzugsweise auf- und abrollbar und damit flexibel und dünnwandig ausgebildet. Es kann hinsichtlich seiner Lichtdurchlässigkeit in vielerlei Varianten vorliegen.

Nach einer vorteilhaften Ausgestaltung umfasst die Montageeinheit einen Rahmen, der aus den Führungsschienen und einer die Führungsschienen verbindenden oberen und unteren Traverse gebildet ist. Das Vorsehen eines Rahmens erhöht die Stabilität der Montageeinheit. Indem die Führungsschienen Bestandteile des Rahmens sind, kann Gewicht gespart werden.

Nach einer weiteren Ausgestaltung weist die Montageeinheit eine am Rahmen angebrachte Vorder- und eine gegenüberliegende Rückwand auf, wobei die Vorder- und die Rückwand jeweils einen zur Form das Kabinenfensters korrespondierenden Durchbruch aufweisen. Durch das Vorsehen der Vorder- und der Rückwand ist die Montageeinheit nach Art einer Montagekassette ausgeführt. Eine solche Montagekassette ist besonders robust und lässt sich besonders einfach und komplikationslos montieren.

Nach einer besonders vorteilhaften Ausgestaltung ist eine mit der Antriebswelle angetriebene Wickelwelle zum Auf- und Abrollen des mit einem im Wesentlichen rechteckigen Zuschnitt ausgebildeten ersten Abschattungsmittels vorgesehen. Das Vorsehen einer von der Antriebswelle verschiedenen Wickelwelle ermöglicht es, die Wickelwelle mit einer von der Antriebswelle verschiedenen Drehgeschwindigkeit zu rotieren. Dabei kann bei einer konstanten Drehgeschwindigkeit der Antriebswelle die Wickelwelle auch mit einer relativ dazu zunehmenden oder abnehmenden Drehgeschwindigkeit rotiert werden.

Zweckmäßigerweise ist die Wickelwelle als Hohlwelle ausgebildet und unter Zwischenschaltung eines elastischen Rückstellmittels drehbar auf einer in der Nähe von ersten Enden der Führungsschienen angebrachten Antriebswelle aufgenommen. Bei dem elastischen Rückstellmittel kann es sich um eine Feder, vorzugsweise eine Torsionsfeder, handeln. Die vorgeschlagene Ausgestaltung ermöglicht beim Auf- und Abrollen des ersten Abschattungsmittels eine Drehgeschwindigkeit der Wickelwelle, welche von der Drehgeschwindigkeit der Antriebswelle verschieden ist. Damit kann trotz eines sich beim Auf- und Abrollen verändernden Wickelradius ein Auf- und Abrollen mit einer konstanten Geschwindigkeit erreicht werden.

Bei der Vorrichtung zum Verdunkeln eines Kabinenfensters ist des Weiteren ein zum Antrieb der Antriebswelle vorgesehener erster Antriebsgurt mit einer ersten Verschiebeleiste fest verbunden, deren Enden in den Führungsschienen geführt sind und an der eine Kante des ersten Abschattungsmittels angebracht ist. Im Sinne der vorliegenden Erfindung wird unter dem Begriff "Antriebsgurt" allgemein ein Mittel zur Übertragung eines Drehmoments verstanden. Es kann sich dabei um einen Keilriemen, einen Zahnriemen, einen Flachriemen, eine Kette oder dgl. handeln. Indem die erste, in den Führungsschienen geführte Verschiebeleiste fest mit dem ersten Antriebsgurt verbunden ist, bewirkt eine Bewegung des ersten Antriebsgurts ein Verschieben der ersten Verschiebeleiste entlang der Führungsschienen. Damit wird gleichzeitig das an der ersten Verschiebeleiste angebrachte erste Abschattungsmittel in eine gewünschte Stellung bewegt.

Der erste Antriebsgurt ist um eine fest mit der Antriebswelle verbundene erste Gurtscheibe und einen im Bereich einer von zweiten Enden der Führungsschienen vorgesehenen zweiten Gurtscheibe geführt. Dabei ist die zweite Gurtscheibe zum Antrieb des ersten Antriebsgurts über eine erste Kupplung wahlweise mit einem ersten Elektromotor verbindbar. Im Sinne der vorliegenden Erfindung wird unter dem Begriff "Gurtscheibe" eine zum jeweils gewählten "Antriebsgurt" korrespondierende Scheibe verstanden. Es kann sich dabei um eine Zahnriemenscheibe, eine Keilriemenscheibe, eine Flachriemenscheibe, ein Ritzel oder dgl. handeln. Das Vorsehen einer ersten Kupplung ermöglicht es, wahlweise den ersten Elektromotor auszukuppeln und damit die erste Verschiebeleiste, beispielsweise manuell oder mit der besonderen mechanischen Rückzugseinrichtung, zu verschieben. Das ermöglicht ein Aufwickeln des ersten Abschattungsmittels auch in Fällen, in denen der erste Elektromotor infolge eines Stromausfalls oder Defekts nicht funktioniert.

Die zweite Gurtscheibe ist zweckmäßigerweise an einer mit dem ersten Elektromotor angetriebenen unteren Antriebswelle angebracht. Das Vorsehen einer unteren Antriebswelle ermöglicht es, den ersten Elektromotor entfernt von der zweiten Gurtscheibe unterzubringen. Damit kann ein besonders kompakter Aufbau der Vorrichtung erreicht werden.

Nach einer besonders vorteilhaften Ausgestaltung ist eine mit einer vorspannbaren Feder versehene Rückzugseinrichtung zum Aufrollen des ersten Abschattungsmittels vorgesehen. Eine solche Rückzugseinrichtung ist zweckmäßigerweise manuell betätigbar. Wegen ihrer mechanischen Ausgestaltung funktioniert sie auch im Falle eines Stromausfalls. Bei einer Betätigung der Rückzugseinrichtung wird durch die Wirkung der vorgespannten Feder das Abschattungsmittel vollständig aufgerollt und damit der Durchbruch freigegeben.

Nach einer weiteren vorteilhaften Ausgestaltung ist vorgesehen, dass die Rückzugseinrichtung eine wahlweise in die untere Antriebswelle einkuppelbare Rückzugswelle umfasst. Die Rückzugseinrichtung kann ferner eine auf der Rückzugswelle aufgenommene weitere Torsionsfeder und eine wahlweise betätigbare Sperreinrichtung zum Sperren einer Drehbewegung der Rückzugswelle im ausgekuppelten Zustand umfassen. Bei manueller Bedienung einer zur Aktivierung der Rückzugseinrichtung vorgesehenen Betätigungseinrichtung wird die Rückzugswelle in die untere Antriebswelle eingekuppelt und nachfolgend die Sperreinrichtung zum Sperren einer Drehbewegung der Rückzugswelle ausgekuppelt. Infolgedessen wird eine durch die vorgespannte weitere Torsionsfeder gespeicherte Kraft freigegeben, wodurch die Rückzugswelle und die damit verbundene untere Antriebswelle gedreht werden. Durch die Drehbewegung der unteren Antriebswelle wiederum wird die Wickelwelle in eine Richtung gedreht, so dass das erste Abschattungsmittel darauf aufgerollt wird. Die vorgeschlagene Rückzugseinrichtung hat den Vorteil, dass die weitere Torsionsfeder die gespeicherte Kraft lediglich bei Auslösen der Rückzugseinrichtung freigibt.

Bei der Vorrichtung zum Verdunkeln eines Kabinenfensters ist des Weiteren vorgesehen, dass in zumindest einer der Führungsschienen zwischen der ersten Verschiebeleiste und dem zweiten Ende der Führungsschiene ein Schleppschlitten vorgesehen ist, und dass der Schleppschlitten mittels der Rückzugseinrichtung in Richtung des ersten Endes der Führungsschiene zurückziehbar ist. Die vorgeschlagene Rückzugseinrichtung ermöglicht eine Bewegung des Schleppschlittens in Richtung des ersten Endes der Führungsschiene. Indem der Schleppschlitten zwischen der ersten Verschiebeleiste und dem zweiten Ende der Führungsschiene vorgesehen ist, wird mit dem Schleppschlitten auch die erste Verschiebeleiste in Richtung des ersten Endes der Führungsschiene geschleppt und damit das erste Abschattungsmittel in seine Ausgangsposition zurückbewegt. Das kann zweckmäßigerweise dadurch geschehen, dass das erste Abschattungsmittel auf die Wickelwelle aufgewickelt wird. Ferner ist in der Nähe des zweiten Endes der Führungsschiene eine Rastvorrichtung zum Verrasten des Schleppschlittens in einer Raststellung vorgesehen. Genauer weist der Schleppschlitten eine Rastklaue auf, die mit einem Rastvorsprung zusammenwirkt, welcher fest an einem ersten Motorschlitten angebracht ist, auf dem der erste Elektromotor gleitverschiebbar gehalten ist.

Die Feder kann eine über einen Flaschenzug vorspannbare Feder sein. Damit ist es möglich, den Schleppschlitten in einem vorgespannten Zustand in der Nähe des zweiten Endes der Führungsschiene zu verrasten. Beim Lösen der Verrastung wird der Schleppschlitten durch die Wirkung der Feder in Richtung des ersten Endes der Führungsschiene zurückgezogen und bewirkt damit ein Zurückstellen des ersten Abschattungsmittels in seine Ausgangsposition.

Nach einer weiteren Ausgestaltung sind die Führungsschienen als Doppelführungsschienen ausgebildet, in denen eine zweite Verschiebeleiste geführt ist, an der eine Kante eines ziehharmonikaartig gefalteten zweiten Abschattungsmittels angebracht ist. Das zweite Abschattungsmittel unterscheidet sich zweckmäßigerweise in seiner Lichtdurchlässigkeit vom ersten Abschattungsmittel. Das erste Abschattungsmittel kann beispielsweise aus einem im Wesentlichen lichtundurchlässigen Material und das zweite Abschattungsmittel aus einem für Licht teilweise durchlässigen Material hergestellt sein. Indem der Durchbruch somit wahlweise mit dem ersten und/oder dem zweiten Abschattungsmittel ganz oder teilweise abgeschattet werden kann, können eine Vielzahl unterschiedlicher Abschattungen eingestellt werden.

Dabei können die Abschattungsmittel aus einem Gewebe, einem Gewirk, einem mit Fasern oder einem Gewebe verstärkten Kunststoff oder dgl. hergestellt sein. Zur Herstellung der Abschattungsmittel werden leichtgewichtige, schwer- oder nichtbrennbare, UV-beständige Materialien bevorzugt.

Zum Bewegen der zweiten Verschiebeleiste kann auf der Antriebswelle zumindest eine relativ dazu drehbare dritte Gurtscheibe vorgesehen sein, um die ein mit der zweiten Verschiebeleiste fest verbundener zweiter Antriebsgurt geführt ist. Des Weiteren kann im Bereich eines der zweiten Enden der Doppelführungsschienen eine vierte Gurtscheibe zum Antrieb des zweiten Antriebsgurts vorgesehen sein, welche über eine zweite Kupplung wahlweise mit einem zweiten Elektromotor verbindbar ist. Der zweite Elektromotor ist - ähnlich wie der erste Elektromotor - mittels der zweiten Kupplung von der vierten Gurtscheibe antriebsmäßig trennbar. Das ermöglicht eine manuelle Bewegung der zweiten Verschiebeleiste oder eine Bewegung der zweiten Verschiebeleiste mittels der Rückzugseinrichtung.

Des Weiteren ist zweckmäßigerweise eine Auslösevorrichtung zum Auskuppeln des ersten Elektromotors und/oder des zweiten Elektromotors vorgesehen. Falls sowohl das erste als auch das zweite Abschattungsmittel vorgesehen sind, sind zweckmäßigerweise mit der Auslösevorrichtung gleichzeitig der erste und der zweite Elektromotor auskuppelbar. - Im Falle einer Betätigung der Auslösevorrichtung können gleichzeitig zumindest der erste Elektromotor und die den Schleppschlitten in der Raststellung haltende Rastvorrichtung auskuppelbar sein. Damit kann der Schleppschlitten freigegeben und damit das erste und ggf. das zweite Abschattungsmittel in eine zurückgezogene Ausgangsposition zurückgefahren werden.

Nachfolgend werden die Ausführungsbeispiele der Erfindung anhand der Zeichnungen näher erläutert. Es zeigen:
- Fig. 1: eine perspektivische Ansicht der erfindungsgemäßen Vorrichtung,
- Fig. 2: eine perspektivische Ansicht der wesentlichen Bestandteile einer ersten Abschattungseinrichtung,
- Fig. 3: eine Detailansicht gemäß Fig. 2,
- Fig. 4: eine perspektivische Ansicht wesentlicher Bestandteile der Vorrichtung mit erster und zweiter Abschattungseinrichtung,
- Fig. 5: eine Detailansicht gemäß Fig. 4,
- Fig. 6: eine Schnittansicht durch die Antriebswelle der Vorrichtung gemäß Fig. 4,
- Fig. 7: eine perspektivische Ansicht wesentlicher Bestandteile einer Rückzugseinrichtung,
- Fig. 8: eine Detailansicht gemäß Fig. 7,
- Fig. 9a: die Detailansicht gemäß Fig. 8 im ausgekuppelten Zustand,
- Fig. 9b: eine weitere perspektivische Ansicht des ausgekuppelten Zustands gemäß Fig. 9a,
- Fig. 10: eine perspektivische Ansicht wesentlicher Bestandteile einer weiteren Rückzugseinrichtung und
- Fig. 11: eine Detailansicht gemäß Fig. 10.

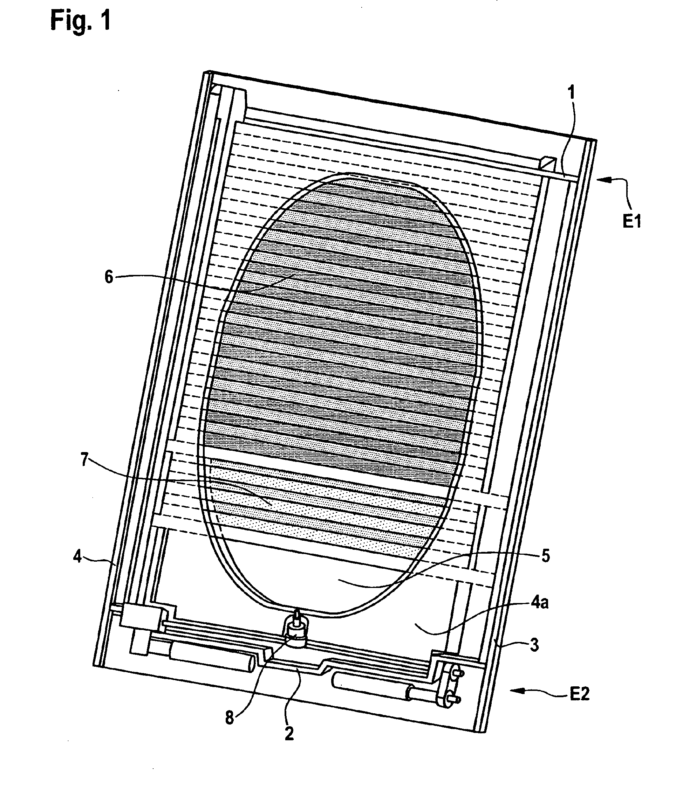

Fig. 1 zeigt eine perspektivische Ansicht einer erfindungsgemäßen Vorrichtung. Die Vorrichtung ist als Montageeinheit bzw. Modul ausgeführt. Die Montageeinheit umfasst einen Rahmen, der aus zwei mittels einer oberen 1 und einer unteren Traverse 2 miteinander verbundenen Führungsschienen 3, 4 gebildet ist. Jede der Führungsschienen 3, 4 weist ein erstes Ende E1 in der Nähe der oberen Traverse 1 und ein zweites Ende E2 in der Nähe der unteren Traverse 2 auf. Am Rahmen sind eine Vorderwand 4a und eine mit einem Abstand dazu gegenüberliegend angeordnete Rückwand angebracht. Die Vorder- 4a sowie die Rückwand weisen jeweils einen Durchbruch 5 auf, dessen Form zur Form eines (hier nicht gezeigten) Kabinenfensters korrespondiert. Zwischen der Vorderwand 4a und der Rückwand sind verschiebbar ein erstes Abschattungsmittel 6 sowie ein zweites Abschattungsmittel 7 geführt. Das erste Abschattungsmittel 6 ist im Wesentlichen undurchlässig für Licht, wohingegen das zweite Abschattungsmittel 7 für Licht teilweise durchlässig ist. Das erste 6 und das zweite Abschattungsmittel 7 sind unabhängig von einander bewegbar. Damit kann der Durchbruch 5 wahlweise abgeschattet werden. Mit dem Bezugszeichen 8 ist ein Betätigungsmittel zum Auslösen einer Rückzugseinrichtung bezeichnet.

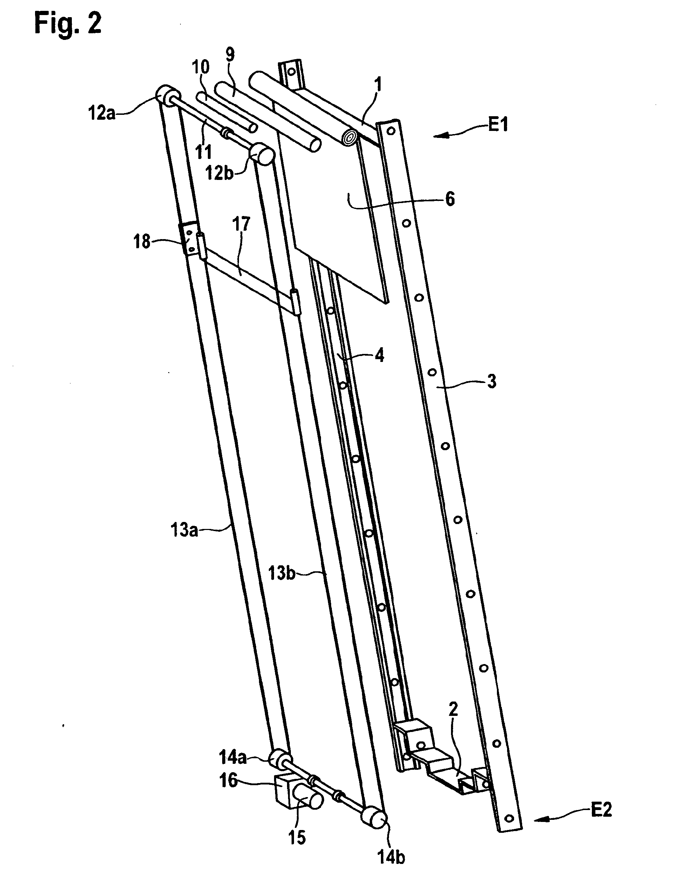

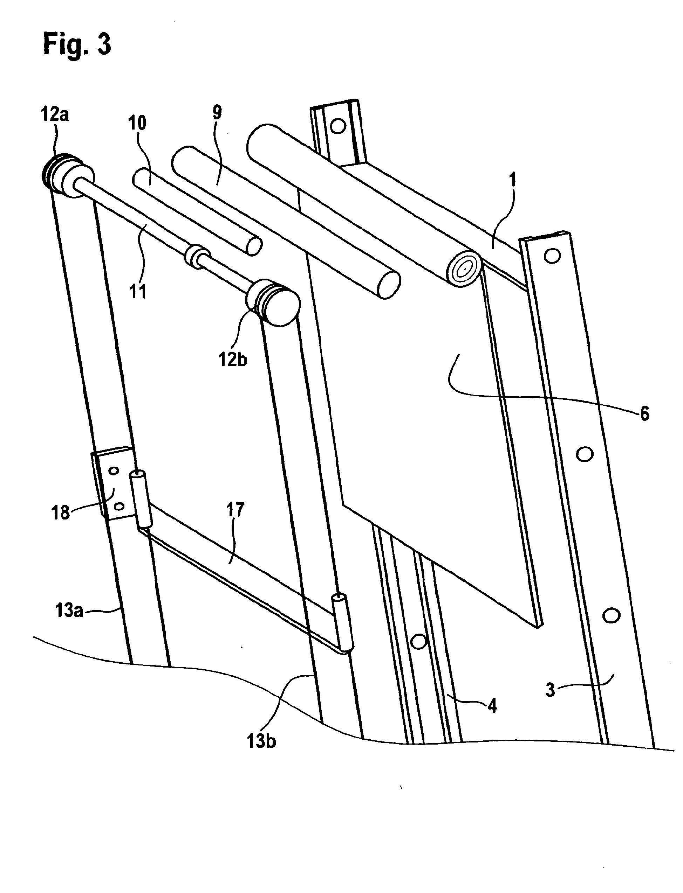

Die Fig. 2 und 3 zeigen in perspektivischer Ansicht die wesentlichen Bestandteile einer ersten Abschattungseinrichtung, mit der das erste Abschattungsmittel 6 entlang den Führungsschienen 3, 4 hin und her bewegbar ist. Zum Aufwickeln des ersten Abschattungsmittels 6 ist eine als Hohlwelle ausgebildete Wickelwelle 9 vorgesehen. Die Wickelwelle 9 kann unter Zwischenschaltung einer Torsionsfeder 10 auf einer Antriebswelle 11 aufgenommen werden. Die Antriebswelle 11 ist mit zwei ersten Zahnriemenscheiben 12a, 12b versehen, die im Wesentlichen endständig angebracht sind. Die ersten Zahnriemenscheiben 12a, 12b sind über erste Zahnriemen 13a, 13b mit zweiten Zahnriemenscheiben 14a, 14b verbunden, welche in der Nähe zweiter Enden E2 der Führungsschienen 3, 4 angebracht sind. Mit dem Bezugszeichen 15 ist ein erster Elektromotor bezeichnet, der über eine erste Kupplung 16 zumindest mit der zweiten Zahnriemenscheibe 14a wahlweise antriebsmäßig verbindbar ist.

Eine erste Verschiebeleiste 17 ist jeweils mit einem hinteren Trum der umlaufenden ersten Zahnriemen 13a, 13b fest verbunden. Die erste Verschiebeleiste 17 ist an ihren beiden Enden so ausgestaltet, dass sie gleitverschiebbar in den Führungsschienen 3, 4 geführt ist. An zumindest einem der beiden Enden der Verschiebeleiste 17 kann ein erstes Führungsmittel 18 angebracht sein.

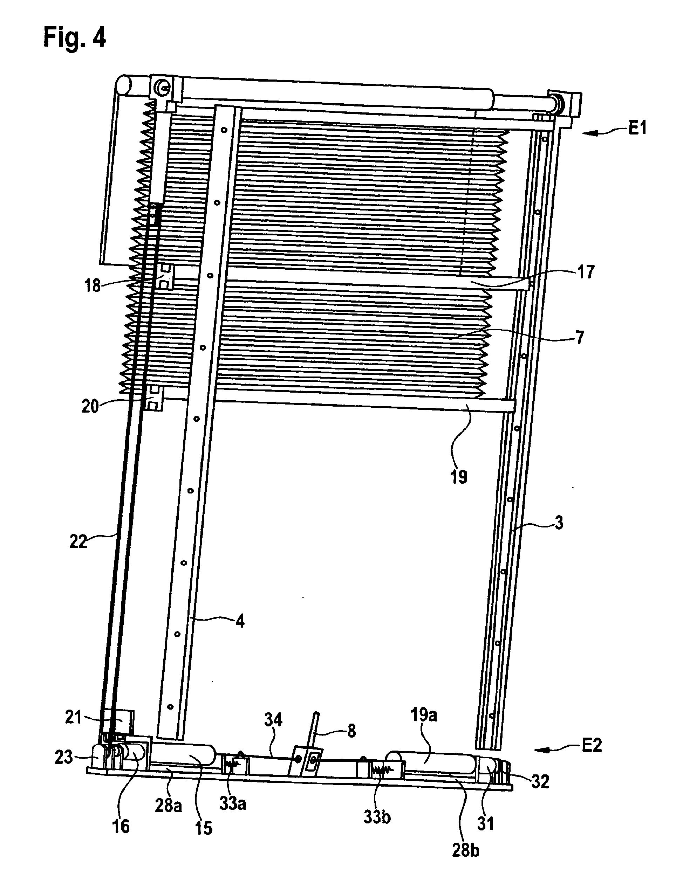

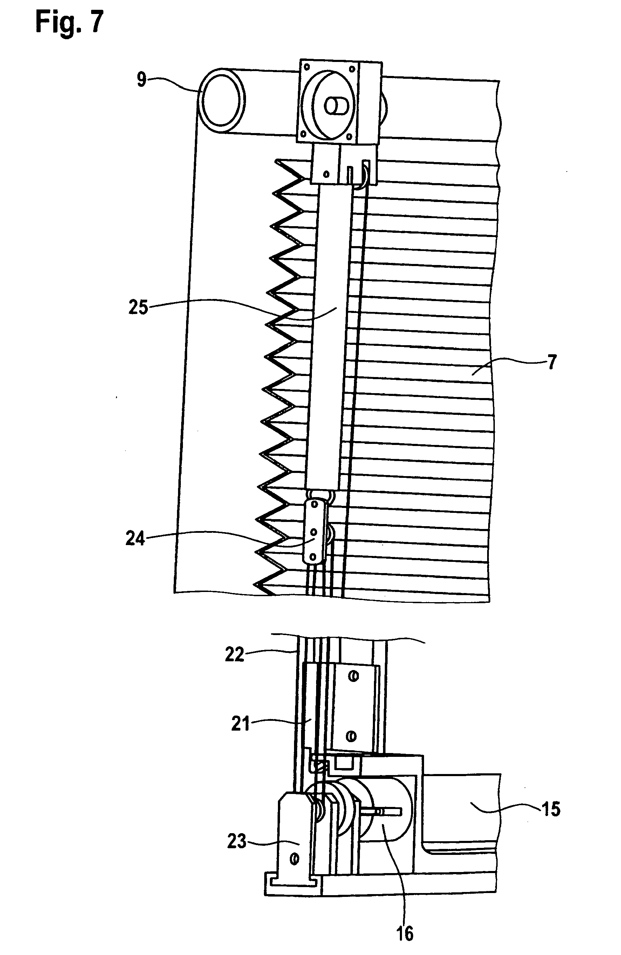

Die Fig. 4,5 und 7 zeigen perspektivische Ansichten der Vorrichtung gemäß den Fig. 2 und 3, wobei hier zusätzlich die wesentlichen Bestandteile einer zweiten Abschattungseinrichtung gezeigt sind. Wie insbesondere aus Fig. 7 ersichtlich ist, handelt es sich bei dem zweiten Abschattungsmittel 7 um ein ziehharmonikaartig gefaltetes Plissee. Das zweite Abschattungsmittel 7 ist mit einer Kante an einer zweiten Verschiebeleiste 19 angebracht, die ebenfalls in den Führungsschienen 3, 4 gteitverschiebbar geführt ist. Zu diesem Zweck sind die Führungsschienen 3, 4 jeweils als Doppelführungsschienen ausgebildet. Mit dem Bezugszeichen 19a ist ein zweiter Elektromotor bezeichnet, welcher zum Antrieb eines (hier nicht gezeigten) zweiten Zahnriemens vorgesehen ist, der ähnlich wie die ersten Zahnriemen 13a, 13b fest mit der zweiten Verschiebeleiste 19 verbunden ist. Die zweite Verschiebeleiste 19 kann - ähnlich wie die erste Verschiebeleiste 17 - zumindest an ihrem einen Ende mit einem zweiten Führungsmittel 20 versehen sein.

Mit dem Bezugszeichen 21 ist ein Schleppschlitten bezeichnet, der über einen Flaschenzug 22 mit unterem Block 23 und oberem Block 24 mit einer Zugfedereinrichtung 25 verbunden ist.

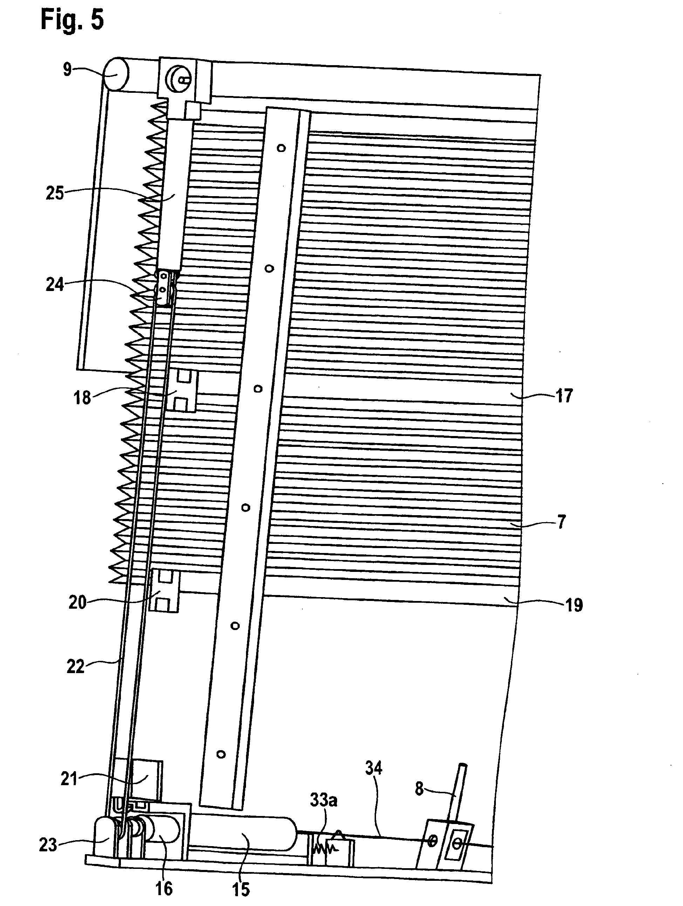

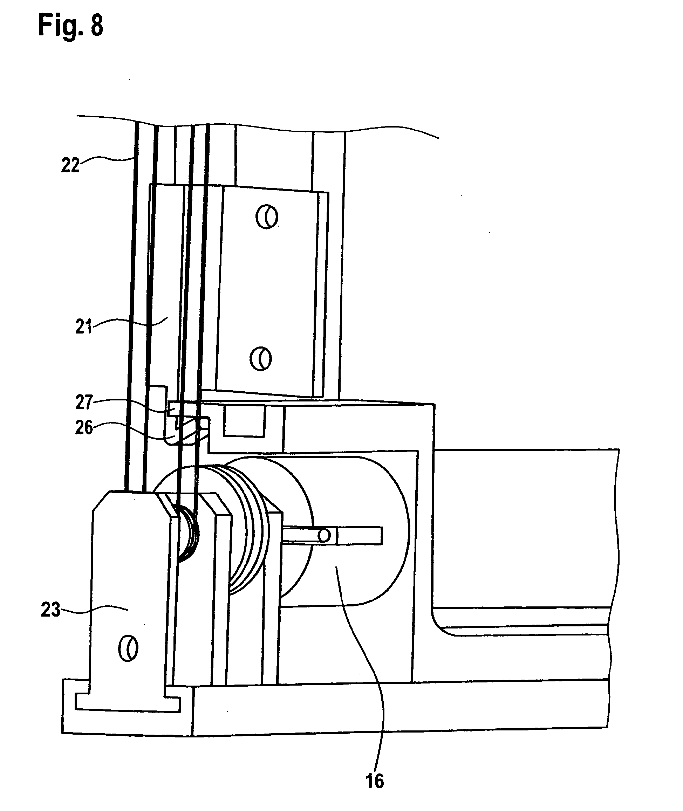

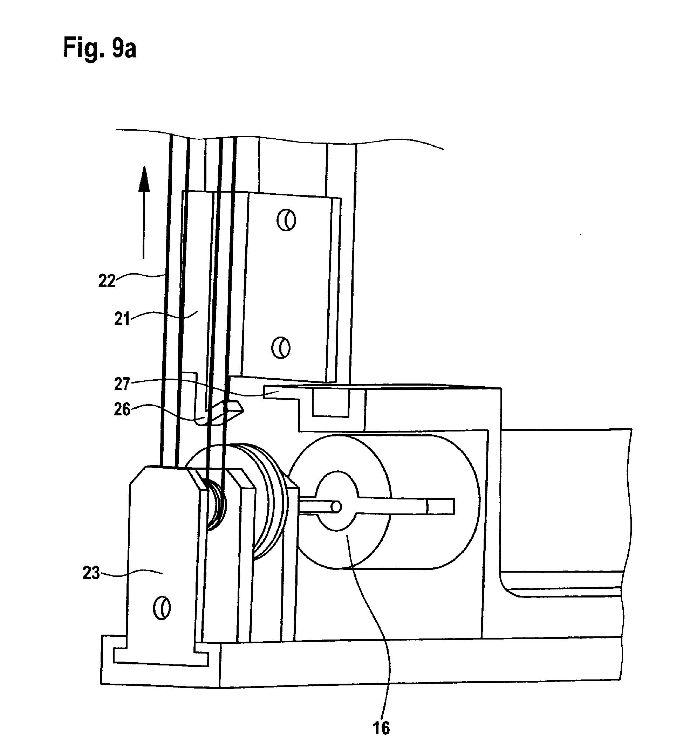

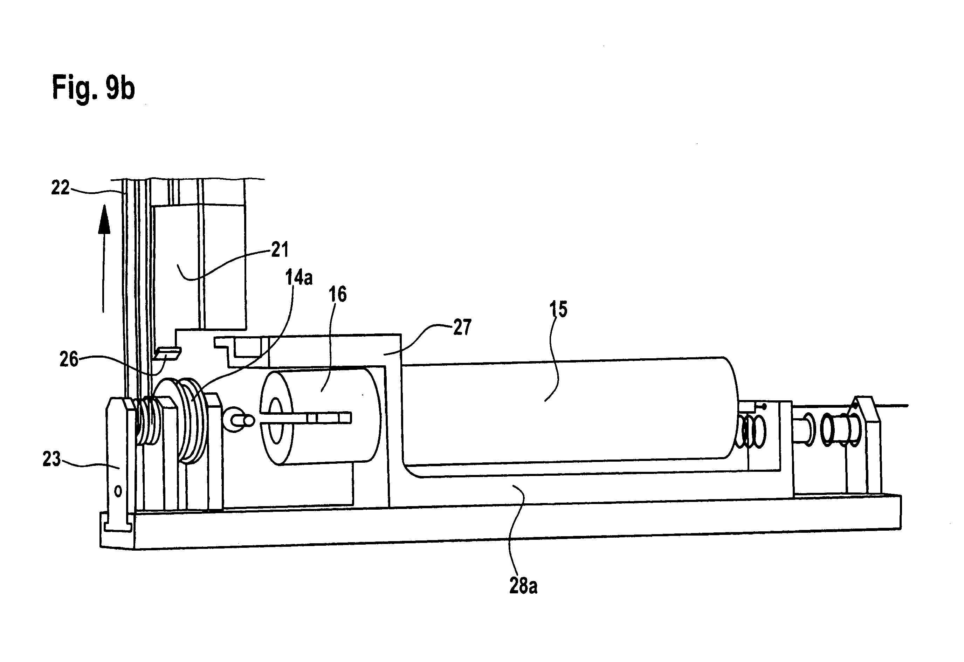

Die Fig. 7 bis 9b zeigen Detailansichten gemäß Fig. 5. Insbesondere aus den Fig. 8, 9a und 9b ist ersichtlich, dass der Schleppschlitten 21 eine Rastklaue 26 aufweist, die mit einem Rastvorsprung 27 zusammenwirkt. Der Rastvorsprung 27 ist fest an einem ersten Motorschlitten 28a angebracht, auf dem der erste Elektromotor 15 gleitverschiebbar gehalten ist. Wie
insbesondere aus Fig. 4 ersichtlich ist, ist auch der zweite Elektromotor 19a auf einem zweiten Motorschlitten 28b gleitverschiebbar gehalten.

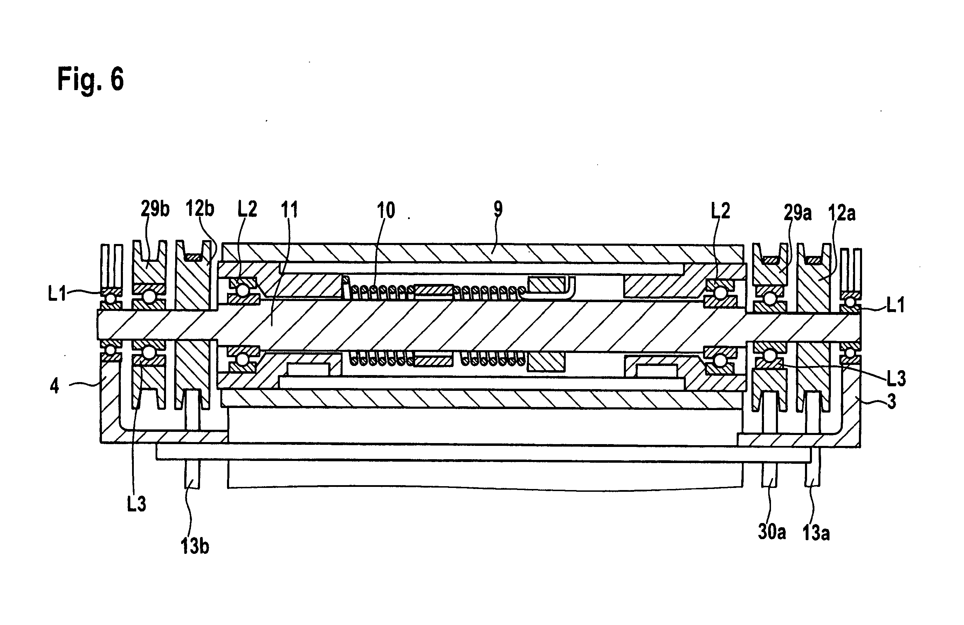

Fig. 6 zeigt eine Schnittansicht durch die Antriebswelle 11. Die Antriebswelle 11 ist mittels erster Kugellager L1 drehbar in den einander gegenüberliegend angeordneten Führungsschienen 3, 4 gehalten. Die ersten Zahnradriemenscheiben 12a und 12b sind fest mit der Antriebswelle 11 verbunden. Um die ersten Zahnriemenscheiben 12a, 12b sind die ersten Zahnriemen 13a, 13b geführt. Die Wickelwelle 9 ist drehbar mittels zweiter Lager L2 auf der Antriebswelle 11 gehalten. Die Torsionsfeder 10 ist einerseits an der Wickelwelle 9 sowie andererseits an der Antriebswelle 11 angebracht, so dass eine Drehbewegung an der Wickelwelle 9 relativ zur Antriebswelle 11 stets ein Drehmoment hervorruft.

Mit dem Bezugszeichen 29a, 29b sind dritte Zahnriemenscheiben bezeichnet, welche mittels dritter Lager L3 drehbar auf der Antriebswelle 11 aufgenommen sind. Um die dritten Zahnriemenscheiben 29a, 29b sind zweite Zahnriemen 30a geführt, von denen hier lediglich einer gezeigt ist. An den zweiten Zahnriemen 30a ist die zweite Verschiebeleiste 19 angebracht.

Wie insbesondere aus der Fig. 4 ersichtlich ist, ist zur Aufnahme des zweiten Zahnriemens 30a (hier nicht gezeigt) in der Nähe des zweiten Endes E2 eine vierte Zahnriemenscheibe 32 vorgesehen, welche über eine zweite Kupplung 31 mit dem zweiten Elektromotor 19a verbunden ist. Mit den Bezugszeichen 33a und 33b sind Druckfedern bezeichnet, welche die Motorschlitten 28a und 28b in eine eingekuppelte Position zwingen. Ein mit dem Betätigungsmittel 8 betätigbarer Seilzug 34 verbindet die Motorschlitten 28a und 28b. Damit können die Motorschlitten 28a, 28b entgegen der Wirkung der Druckfedern 33a, 33b in Richtung des Betätigungsmittels bewegt und damit die erste 16 und die zweite Kupplung 31 getrennt werden.

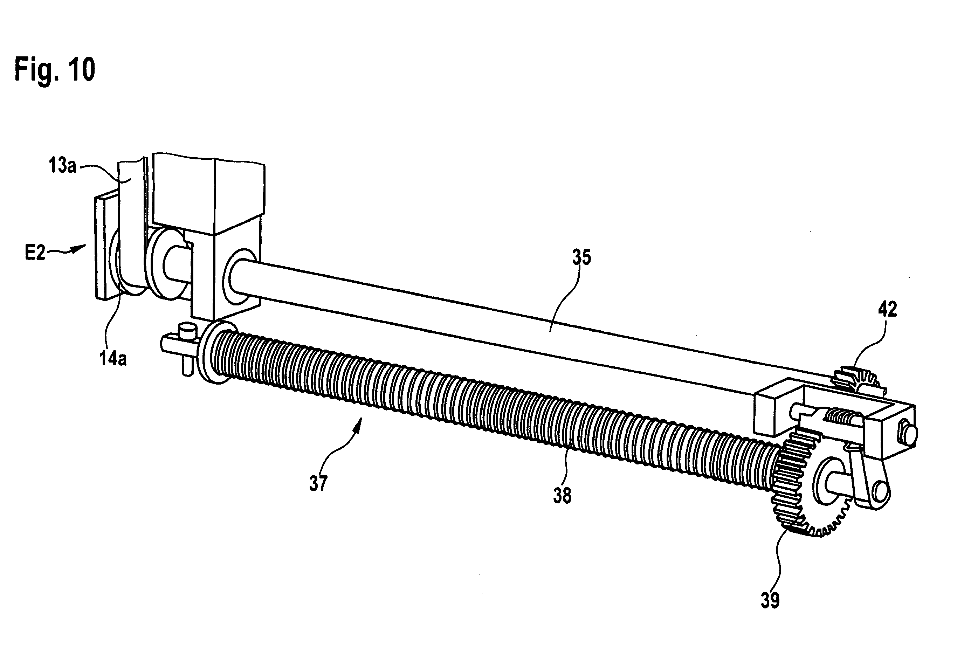

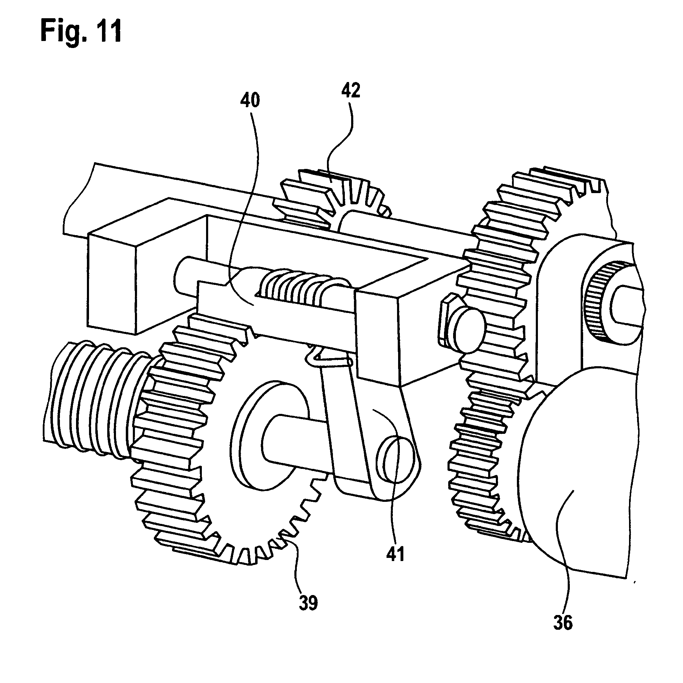

Die Fig. 10 und 11 zeigen perspektivische Ansichten wesentlicher Bestandteile einer weiteren Rückzugseinrichtung. Bei dem hier gezeigten Ausführungsbeispiel ist die zweite Zahnriemenscheibe 14a an einer unteren Antriebswelle 35 angebracht. Die untere Antriebswelle 35 kann über einen einzigen dritten Elektromotor 36 angetrieben werden. Dabei kann die Kraftübertragung über Zahnräder erfolgen. Mit dem Bezugszeichen 37 ist eine Rückzugswelle bezeichnet, welche entgegen der elastischen Kraft einer weiteren Torsionsfeder 38 drehbar ist. Am einen Ende der Rückzugswelle 37 ist ein erstes Zahnrad 39 befestigt, in welches eine Sperrklinke 40 eingreift. Die Rückzugswelle 37 ist mittels eines Schwenkhebels 41 parallel zur unteren Antriebswelle 35 bewegbar, so dass das erste Zahnrad 39 wahlweise in Eingriff mit einem zweiten Zahnrad 42 gebracht werden kann, welches auf der unteren Antriebswelle 35 befestigt ist. Dabei ist eine die Sperrklinke 40 umfassende Sperrklinkeneinrichtung so ausgestaltet, dass die Sperrklinke 40 aus dem Wirkbereich des ersten Zahnrads 39 wegbewegt wird, sobald dieses im Eingriff mit dem zweiten Zahnrad 42 ist. Gleichzeitig kann der dritte Elektromotor 36 bezüglich der unteren Antriebswelle 35 ausgekuppelt werden. - In Fig. 10 ist lediglich ein unterer linker Teil der Vorrichtung gezeigt. In einem hier nicht gezeigten unteren rechten Teil kann eine ähnlich ausgestaltete weitere Rückzugseinrichtung vorgesehen sein. Insbesondere kann eine weitere untere Antriebswelle vorgesehen sein, welche mit einem vierten Elektromotor angetrieben wird. Ferner kann eine zur weiteren unteren Antriebswelle korrespondierende weitere Rückzugswelle mit Sperrklinkeneinrichtung vorgesehen sein. Eine solche weitere Rückzugseinrichtung kann zum Rückzug des zweiten Abschattungsmittels dienen.

Nachfolgend wird die Funktion der Vorrichtung näher erläutert.

### Auf- und Abwickeln des ersten Abschattungsmittels

Zum Abwickeln des ersten Abschattungsmittels 6 befindet sich der erste Elektromotor 15 über die erste Kupplung 16 im eingekuppelten Zustand mit der ersten Zahnriemenscheibe 14a.
Eine Drehbewegung des ersten Elektromotors 15 versetzt über den ersten Zahnriemen 13a die Antriebswelle 11 in Drehbewegung. Die fest mit den ersten Zahnriemen 13a, 13b verbundene erste Verschiebeleiste 17 wird entlang der Führungsschienen 3, 4 bewegt. Bei einer Bewegung der ersten Verschiebeleiste 17 in Richtung der zweiten Traverse 2 wird das erste Abschattungsmittel 6 von der Wickelwelle 9 abgewickelt. Dabei nimmt stetig ein Wickelradius ab, wodurch sich die Wickelwelle 9 relativ zur Antriebswelle 11 - welche mit konstanter Geschwindigkeit rotiert wird - zunehmend schneller dreht. Der Relativdrehbewegung der Wickelwelle 9 wirkt die Kraft der Torsionsfeder 10 entgegen, so dass mit zunehmender Abwickellänge des ersten Abschattungsmittels 6 eine zunehmende Vorspannung erzeugt wird. Diese Vorspannung dient bei der entgegengesetzten Aufwickelbewegung der Wickelwelle 9 dazu, diese relativ zur Antriebswelle 11 in gleicher Rotationsrichtung, jedoch mit einer davon z. T. verschiedenen Drehgeschwindigkeit zu drehen. Damit wird in vorteilhafter Weise sichergestellt, dass das erste Abschattungsmittel 6 beim Auf- und Abwickeln stets gespannt gehalten wird. Eine durch eine Veränderung des Wickelradius beim Auf- und Abwickeln bedingte unterschiedliche Drehgeschwindigkeit der Wickelwelle relativ zur Antriebswelle kann damit kompensiert werden.

### Ein- und Ausfahren des zweiten Abschattungsmittels

Das zweite Abschattungsmittel 7 ist ziehharmonikaartig gefaltet und wird von der zweiten Verschiebeleiste 19 getragen. Zum Aus- und Einfahren des zweiten Abschattungsmittels 7 genügt eine einfache Verschiebebewegung der zweiten Verschiebeleiste 19, welche ebenfalls in den Führungsschienen 3, 4 geführt ist. Zu diesem Zweck wird die zweite Verschiebeleiste 19 über zweite Zahnriemen 30a, 30b, welche über die dritten Zahnriemenscheiben 29a, 29b geführt sind, mittels des zweiten Elektromotors 19 und der damit antriebsmäßig über die zweite Kupplung 31 verbundenen vierten Zahnriemenscheiben 32 angetrieben.

### Rückzugseinrichtung

Im Falle eines Stromausfalls können mittels einer Rückzugseinrichtung das erste Abschattungsmittel 6 automatisch aufgewickelt und das zweite Abschattungsmittel 7 automatisch eingefahren werden. Zu diesem Zweck sind die durch die Wirkung der Druckfedern 33a in den eingekuppelten Zustand gezwungenen Motorschlitten 28a, 28b mit einem Seilzug 34 miteinander verbunden. Durch Betätigung des Betätigungshebels 8 wird der Seilzug 34 verkürzt. Infolge dessen werden die Motorschlitten 28a, 28b aufeinander zubewegt und damit gegenüber den jeweiligen Zahnriemenscheiben entkuppelt. Gleichzeitig wird eine durch die Rasteinrichtung 26, 27 bewirkte Verrastung gelöst. Der über den Flaschenzug 22, 23, 24 mit der Zugfeder 25 verbundene Schleppschlitten 21 wird durch die Wirkung der Zugfeder 25 in Richtung des ersten Endes E1 der Führungsschiene 4 bewegt. Dabei schleppt der Schleppschlitten 21 die zweite Verschiebeleiste 19 mittels des zweiten Führungsmittels 20 sowie die erste Verschiebeleiste 17 mittels des ersten Führungsmittels 18 zurück in ihre Ausgangsstellung. Dabei werden das erste Abschattungsmittel 6 auf die Wickelwelle 9 aufgewickelt sowie das zweite Abschattungsmittel 7 eingefahren.

Bei der in den Fig. 10 und 11 gezeigten alternativen weiteren Rückzugseinrichtung wird zum Erzeugen und Speichern einer Rückstellkraft die Rückzugswelle 37 in die untere Antriebswelle 35 eingekuppelt. Nachfolgend wird der dritte Elektromotor 36 solange betrieben, bis das erste Abschattungsmittel 6 im Wesentlichen von der Wickelwelle 9 abgewickelt worden ist. Dabei wird die weitere Torsionsfeder 38 gespannt. Anschließend wird mit einer in den Fig. 10 und 11 nicht näher gezeigten weiteren Betätigungseinrichtung die Sperrklinke 40 in Eingriff mit dem ersten Zahnrad 39 gebracht, so dass eine Drehbewegung der Rückzugswelle 37 blockiert ist. Damit wird die in der weiteren Torsionsfeder 38 aufgenommene Spannkraft gespeichert. Anschließend wird die Rückzugswelle 37 verschwenkt, so dass das blockierte erste Zahnrad 39 und das zweite Zahnrad 42 nicht mehr im Eingriff sind, d. h. die Rückzugswelle 37 wird ausgekuppelt.

Zum Betätigen der weiteren Rückzugseinrichtung wird mit der (hier nicht gezeigten) weiteren Betätigungseinrichtung die Rückzugswelle 37 in Richtung der unteren Antriebswelle 35 verschwenkt, bis das erste Zahnrad 39 im Eingriff mit dem zweiten Zahnrad 42 ist. Nachfolgend wird die Sperrklinke 40 aus dem Wirkbereich des ersten Zahnrads 39 herausgezogen. Damit wird die in der weiteren Torsionsfeder 38 gespeicherte Kraft freigegeben. Es wird von der Wickelwelle 9 ein Drehmoment auf die untere Antriebswelle 35 und damit über die ersten Zahnriemen 13a, 13b die Wickelwelle 9 so angetrieben, dass die Abschattungsmittel 6, 7 in Richtung der Wickelwelle 8 gezogen werden. Dabei ist die weitere Torsionsfeder 38 zweckmäßigerweise so dimensioniert, dass damit auch der stromlose dritte Elektromotor 36 gedreht werden kann. In diesem Fall kann vorteilhafterweise auf eine Kupplung zwischen dem dritten Elektromotor und der unteren Antriebswelle 35 verzichtet werden.

Die erfindungsgemäß vorgeschlagene Vorrichtung eignet sich nicht nur zum Verdunkeln von Kabinenfenstern von Flugzeugen, sondern auch von Wohnmobilen, Wohnwagen, Wohncontainern,
Bullaugen von Schiffen oder Fenstern von Wohngebäuden oder Kraftfahrzeugen.

### Bezugszeichenliste

- 1: obere Traverse
- 2: untere Traverse
- 3: erste Führungsschiene
- 4: zweite Führungsschiene
- 4a: Vorderwand
- 5: Durchbruch
- 6: erstes Abschattungsmittel
- 7: zweites Abschattungsmittel
- 8: Betätigungsmittel
- 9: Wickelwelle
- 10: Torsionsfeder
- 11: Antriebswelle
- 12a, 12b: erste Zahnriemenscheiben
- 13a, 13b: erste Zahnriemen
- 14a, 14b: zweite Zahnriemenscheiben
- 15: erster Elektromotor
- 16: erste Kupplung
- 17: erste Verschiebeleiste
- 18: erstes Führungsmittel
- 19: zweite Verschiebeleiste
- 19a: zweiter Elektromotor
- 20: zweites Führungsmittel
- 21: Schleppschlitten
- 22: Flaschenzug
- 23: unterer Block
- 24: oberer Block
- 25: Zugfedereinrichtung
- 26: Rastklaue
- 27: Rastvorsprung
- 28a, 28b: Motorschlitten
- 29a, 29b: dritte Zahnriemenscheibe
- 30a, 30b: zweite Zahnriemen
- 31: zweite Kupplung
- 32: vierte Zahnriemenscheibe
- 33a, 33b: Druckfeder
- 34: Seilzug
- 35: untere Antriebswelle
- 36: dritter Elektromotor
- 37: Rückzugswelle
- 38: weitere Torsionsfeder
- 39: erstes Zahnrad
- 40: Sperrklinke
- 41: Schwenkhebel
- 42: zweites Zahnrad

- E1: erstes Ende
- E2: zweites Ende
- L1: erste Lager
- L2: zweite Lager
- L3: dritte Lager

## Patentansprüche

1. Vorrichtung zum Verdunkeln eines Kabinenfensters mit einer Antriebswelle (9) zum Hin- und Herbewegen eines ersten, in zwei Führungsschienen (3, 4) geführten ersten Abschattungsmittels (6), wobei die Antriebswelle (9) und die Führungsschienen (3, 4) in einer gemeinsamen Montageeinheit zusammengefasst sind,
wobei zumindest ein zum Antrieb der Antriebswelle (11) vorgesehener erster Antriebsgurt (13a, 13b) mit einer ersten Verschiebeleiste (17) fest verbunden ist, deren Enden in den Führungsschienen (3, 4) geführt sind und an der eine Kante des ersten Abschattungsmittels (6) angebracht ist,
wobei der erste Antriebsgurt (13a, 13b) um eine fest mit der Antriebswelle (11) verbundene erste Gurtscheibe (12a, 12b) und eine im Bereich einer von zweiten Enden (E2) der Führungsschienen (3, 4) vorgesehenen zweiten Gurtscheibe (14a, 14b) geführt ist,
wobei die zweite Gurtscheibe (14a, 14b) zum Antrieb des ersten Antriebsgurts (13a, 13b) über eine erste Kupplung (16) wahlweise mit einem ersten Elektromotor (15) verbindbar ist,
wobei in zumindest einer der Führungsschienen (3, 4) zwischen der ersten Verschiebeleiste (17) und dem zweiten Ende (E2) der Führungsschiene (3, 4) ein Schleppschlitten (21) vorgesehen ist,
wobei eine Rückzugseinrichtung zum Zurückziehen des Schleppschlittens (21) in Richtung des ersten Endes (E1) der Führungsschiene (3, 4) vorgesehen ist,
und wobei der Schleppschlitten (21) eine Rastklaue (26) aufweist, welche mit einem Rastvorsprung (27) zusammenwirkt, welcher fest an einem ersten Motorschlitten (28a) angebracht ist, auf welchem der erste Elektromotor (15) gleitverschiebbar gehalten ist.

2. Vorrichtung nach Anspruch 1, wobei die Montageeinheit einen Rahmen umfasst, der aus den Führungsschienen (3, 4) und einer die Führungsschienen (3, 4) verbindenden oberen (1) und unteren Traverse (2) gebildet ist.

3. Vorrichtung nach einem der vorhergehenden Ansprüche, wobei die Montageeinheit eine am Rahmen angebrachte Vorder- (4a) und eine gegenüberliegende Rückwand aufweist, wobei die Vorder- (4a) und die Rückwand jeweils einen zur Form des Kabinenfensters korrespondierenden Durchbruch (5) aufweisen.

4. Vorrichtung nach einem der vorhergehenden Ansprüche, wobei eine mit der Antriebswelle (11) angetriebene Wickelwelle (9) zum Auf- und Abrollen des mit einem im Wesentlichen rechteckigen Zuschnitt ausgebildeten ersten Abschattungsmittels (6) vorgesehen ist.

5. Vorrichtung nach Anspruch 4, wobei die Wickelwelle (9) als Hohlwelle ausgebildet und unter Zwischenschaltung eines elastischen Rückstellmittels drehbar auf der in der Nähe von ersten Enden (E1) der Führungsschienen (3, 4) angebrachten Antriebswelle (11) aufgenommen ist.

6. Vorrichtung nach einem der vorhergehenden Ansprüche, wobei die Rückzugseinrichtung mit einer vorspannbaren Feder versehen und zum Aufrollen des ersten Abschattungsmittels vorgesehen ist, und wobei die Feder (15) über einen Flaschenzug vorspannbar ist.

7. Vorrichtung nach einem der vorhergehenden Ansprüche, wobei die Führungsschienen (3, 4) als Doppelführungsschienen ausgebildet sind, in denen eine zweite Verschiebeleiste (19) geführt ist, an der eine Kante eines ziehharmonikaartig gefalteten zweiten Abschattungsmittels (7) angebracht ist.

8. Vorrichtung nach einem der vorhergehenden Ansprüche, wobei auf der Antriebswelle (11) zumindest eine relativ dazu drehbare dritte Gurtscheibe (29a, 29b) angebracht ist, um die ein mit der zweiten Verschiebeleiste (19) verbundener zweiter Antriebsgurt (30a, 30b) geführt ist.

9. Vorrichtung nach einem der vorhergehenden Ansprüche, wobei im Bereich eines der zweiten Enden (E2) der Doppelführungsschienen eine vierte Gurtscheibe (32) zum Antrieb des zweiten Antriebsgurts (30a, 30b) vorgesehen ist, welche über eine zweite Kupplung (31) wahlweise mit einem zweiten Elektromotor (19a) verbindbar ist.

10. Vorrichtung nach einem der vorhergehenden Ansprüche, wobei der Schleppschlitten (21) zwischen der zweiten Verschiebeleiste (19) und dem zweiten Ende (E2) der Führungsschiene (3, 4) vorgesehen ist.

11. Vorrichtung nach einem der vorhergehenden Ansprüche, wobei eine Auslösevorrichtung (8) zum Auskuppeln zumindest des ersten Elektromotors (15) und/oder des zweiten Elektromotors (15) vorgesehen ist.

12. Vorrichtung nach Anspruch 10, wobei mit der Auslösevorrichtung (8) gleichzeitig zumindest der erste (15) und die den Schleppschlitten in der Raststellung haltende Rastvorrichtung (26,27) auskuppelbar sind.

13. Vorrichtung nach einem der vorangehenden Ansprüche, wobei eine erste Druckfeder (33a) vorgesehen ist, welche den ersten Motorschlitten (28a) in eine eingekuppelte Position zwingt.

14. Vorrichtung nach einem der Ansprüche 9 bis 13, wobei der zweite Elektromotor (19a) auf einem zweiten Motorschlitten (28b) gleitverschiebbar gehalten ist, und wobei eine zweite Druckfeder (33b) vorgesehen ist, welche den zweiten Motorschlitten (28b) in eine eingekuppelte Position zwingt.

## Claims

1. Device for darkening a cabin window, with a drive shaft (11) for moving a first shading means (6), which is guided in two guide rails (3, 4), to and fro, wherein the drive shaft (11) and the guide rails (3, 4) are combined in a common mounting unit, wherein at least one first drive strap (13a, 13b) which is provided for driving the drive shaft (11) is fixedly connected to a first displacement bar (17), the ends of which are guided in the guide rails (3, 4) and to which an edge of the first shading means (6) is attached, wherein the first drive strap (13a, 13b) is guided about a first strap pulley (12a, 12b), which is fixedly connected to the drive shaft (11), and about a second strap pulley (14a, 14b) provided in the region of one of the second ends (E2) of the guide rails (3, 4), wherein the second strap pulley (14a, 14b) can optionally be connected to a first electric motor (15) via a first coupling (16) in order to drive the first drive strap (13a, 13b), wherein a towing slide (21) is provided in at least one of the guide rails (3, 4) between the first displacement bar (17) and the second end (E2) of the guide rail (3, 4), wherein a pull-back device is provided for drawing back the towing slide (21) in the direction of the first end (E1) of the guide rail (3, 4), and wherein the towing slide (21) has a latching claw (26) which interacts with a latching projection (27) which is attached fixedly to a first motor slide (28a) on which the first electric motor (15) is slideably held.

2. Device according to Claim 1, wherein the mounting unit comprises a frame which is formed from the guide rails (3, 4) and an upper crosspiece (1) and lower crosspiece (2) connecting the guide rails (3, 4).

3. Device according to one of the preceding claims, wherein the mounting unit has a front wall (4a) attached to the frame and an opposite rear wall, and wherein the front wall (4a) and the rear wall each have an aperture (5) corresponding to the shape of the cabin window.

4. Device according to one of the preceding claims, wherein a winding shaft (9) which is driven by the drive shaft (11) and is intended for rolling up and unrolling the first shading means (6), which is formed by a substantially rectangular blank, is provided.

5. Device according to Claim 4, wherein the winding shaft (9) is designed as a hollow shaft and, with the interconnection of an elastic resetting means, is held rotatably on the drive shaft (11) which is provided in the vicinity of first ends (E1) of the guide rails (3, 4).

6. Device according to one of the preceding claims, wherein the pull-back device is provided with a pretensionable spring and is provided for rolling up the first shading means, and wherein the spring (15) can be pretensioned via a block and tackle.

7. Device according to one of the preceding claims, wherein the guide rails (3, 4) are designed as double guide rails in which a second displacement bar (19) is guided, to which displacement bar an edge of a second shading means (7) folded in the manner of an accordion is attached.

8. Device according to one of the preceding claims, wherein at least one third strap pulley (29a, 29b) which is rotatable relative to the drive shaft (11) and about which a second drive strap (30a, 30b) which is connected to the second displacement bar (19) is guided is attached on said drive shaft.

9. Device according to one of the preceding claims, wherein a fourth strap pulley (32) for driving the second drive strap (30a, 30b) is provided in the region of one of the second ends (E2) of the double guide rails, said strap pulley being optionally connectable to a second electric motor (19a) via a second coupling (31).

10. Device according to one of the preceding claims, wherein the towing slide (21) is provided between the second displacement bar (19) and the second end (E2) of the guide rail (3, 4).

11. Device according to one of the preceding claims, wherein a release device (8) for decoupling at least the first electric motor (15) and/or the second electric motor (19a) is provided.

12. Device according to Claim 10, wherein at least the first electric motor (15) and the latching device (26, 27), which keeps the towing slide in the latching position, can be decoupled simultaneously by the release device (8).

13. Device according to one of the preceding claims, wherein a first compression spring (33a) is provided which forces the first motor slide (28a) into a coupled-in position.

14. Device according to one of Claims 9 to 13, wherein the second electric motor (19a) is slideably held on a second motor slide (28b), and wherein a second compression spring (33b) is provided which forces the second motor slide (28b) into a coupled-in position.

## Revendications

1. Dispositif d'obscurcissement d'une fenêtre de cabine comprenant un arbre d'entraînement (11) pour le déplacement d'avant en arrière d'un premier moyen d'obscurcissement (6) guidé dans deux rails de guidage (3, 4), l'arbre d'entraînement (11) et les rails de guidage (3, 4) étant rassemblés en une unité de montage commune, au moins une première courroie d'entraînement (13a, 13b) prévue pour l'entraînement de l'arbre d'entraînement (11) étant connectée fixement à une première barrette de glissement (17), dont les extrémités sont guidées dans les rails de guidage (3, 4) et sur laquelle est montée une arête du premier moyen d'obscurcissement (6),
la première courroie d'entraînement (13a, 13b) étant guidée autour d'une première poulie de courroie (12a, 12b) connectée fixement à l'arbre d'entraînement (11) et d'une deuxième poulie de courroie (14a, 14b) prévue dans la région d'une de deuxièmes extrémités (E2) des rails de guidage (3, 4),
la deuxième poulie de courroie (14a, 14b) pouvant être connectée par le biais d'un premier embrayage (16) de manière sélective à un premier moteur électrique (15) en vue de l'entraînement de la première courroie d'entraînement (13a, 13b),
un chariot d'entraînement (21) étant prévu dans au moins l'un des rails de guidage (3, 4) entre la première barrette de glissement (17) et la deuxième extrémité (E2) du rail de guidage (3, 4), un dispositif de rétraction étant prévu pour ramener le chariot d'entraînement (21) dans la direction de la première extrémité (E1) du rail de guidage (3, 4),
et le chariot d'entraînement (21) présentant une griffe d'encliquetage (26) qui coopère avec une saillie d'encliquetage (27) qui est montée fixement sur un premier chariot de moteur (28a) sur lequel le premier moteur électrique (15) est maintenu de manière déplaçable par glissement.

2. Dispositif selon la revendication 1, dans lequel l'unité de montage comprend un cadre formé à partir des rails de guidage (3, 4) et d'une traverse supérieure (1) et d'une traverse inférieure (2) reliant les rails de guidage (3, 4).

3. Dispositif selon l'une quelconque des revendications précédentes, dans lequel l'unité de montage présente une paroi avant (4a) montée sur le cadre et une paroi arrière opposée, la paroi avant (4a) et la paroi arrière présentant chacune un orifice (5) correspondant à la forme de la fenêtre de cabine.

4. Dispositif selon l'une quelconque des revendications précédentes, dans lequel un arbre d'enroulement (9) entraîné par l'arbre d'entraînement (11) est prévu pour enrouler et dérouler le premier moyen d'obscurcissement (6) réalisé avec une pièce découpée essentiellement rectangulaire.

5. Dispositif selon la revendication 4, dans lequel l'arbre d'enroulement (9) est réalisé sous forme d'arbre creux et est reçu, par interposition d'un moyen de rappel élastique, de manière rotative sur l'arbre d'entraînement (11) monté à proximité des premières extrémités (E1) des rails de guidage (3, 4).

6. Dispositif selon l'une quelconque des revendications précédentes, dans lequel le dispositif de rétraction est pourvu d'un ressort pouvant être précontraint et est prévu pour l'enroulement du premier moyen d'obscurcissement, le ressort (15) pouvant être précontraint par le biais d'un palan.

7. Dispositif selon l'une quelconque des revendications précédentes, dans lequel les rails de guidage (3, 4) sont réalisés sous forme de rails de guidage doubles, dans lesquels est guidée une deuxième barrette de glissement (19), sur laquelle est montée une arête d'un deuxième moyen d'obscurcissement (7) plié en accordéon.

8. Dispositif selon l'une quelconque des revendications précédentes, dans lequel au moins une troisième poulie de courroie (29a, 29b) est montée sur l'arbre d'entraînement (11) de manière à pouvoir tourner par rapport à celui-ci, une deuxième courroie d'entraînement (30a, 30b) connectée à la deuxième barrette de glissement (19) étant guidée autour de cette troisième poulie de courroie.

9. Dispositif selon l'une quelconque des revendications précédentes, dans lequel, dans la région de l'une des deuxièmes extrémités (E2) des rails de guidage doubles, est prévue une quatrième poulie de courroie (32) pour l'entraînement de la deuxième courroie d'entraînement (30a, 30b), laquelle peut être connectée par le biais d'un deuxième embrayage (31) de manière sélective à un deuxième moteur électrique (19a).

10. Dispositif selon l'une quelconque des revendications précédentes, dans lequel le chariot d'entraînement (21) est prévu entre la deuxième barrette de glissement (19) et la deuxième extrémité (E2) du rail de guidage (3, 4).

11. Dispositif selon l'une quelconque des revendications précédentes, dans lequel il est prévu un dispositif de déclenchement (8) pour le désaccouplement d'au moins le premier moteur électrique (15) et/ou du deuxième moteur électrique (19a).

12. Dispositif selon la revendication 10, dans lequel au moins le premier moteur électrique (15) et le dispositif d'encliquetage (26, 27) retenant le chariot d'entraînement dans la position d'encliquetage peuvent être désaccouplés simultanément avec le dispositif de déclenchement (8).

13. Dispositif selon l'une quelconque des revendications précédentes, dans lequel il est prévu un premier ressort de compression (33a) qui force le premier chariot de moteur (28a) dans une position embrayée.

14. Dispositif selon l'une quelconque des revendications 9 à 13, dans lequel le deuxième moteur électrique (19a) est maintenu de manière déplaçable par glissement sur un deuxième chariot de moteur (28b), et dans lequel il est prévu un deuxième ressort de compression (33b) qui force le deuxième chariot de moteur (28b) dans une position embrayée.
